# EUROPÄISCHE PATENTANMELDUNG

(11) **EP 4 806 244 A1**
(43) Veröffentlichungstag der Anmeldung: **16.09.2026**
(21) Anmeldenummer: 26163869.6
(22) Anmeldetag: 11.03.2026
(51) Int. Cl.: A01B 63/10, A01C 7/20, F15B 11/028

(54) **LANDWIRTSCHAFTLICHE ARBEITSMASCHINE**

(30) Priorität: 12.03.2025 DE 102025109454
(71) Anmelder: Lemken GmbH & Co KG, 46519 Alpen (DE)
(72) Erfinder: Ossing, Roman, 46348 Raesfeld (DE); Derksen, Lukas, 46519 Alpen (DE)

(57) **Zusammenfassung**

Die vorliegende Erfindung betrifft eine landwirtschaftliche Arbeitsmaschine, insbesondere zur Bodenbearbeitung, mit mindestens einem verlagerbar angeordneten Werkzeug, einer hydraulischen Stelleinrichtung zum Verlagern des mindestens einen Werkzeuges zwischen einer ausgehobenen Transportposition und einer abgesenkten Arbeitsposition, wobei die Stelleinrichtung mindestens einen fluidgefüllten Hydraulikzylinder umfasst, welcher zwei Zylinderräume aufweist, wobei die Zylinderräume durch einen verschiebbaren Kolben getrennt sind, und wobei die Stelleinrichtung mit einem Hydrauliksystem mit einer Betätigungseinheit zur Beaufschlagung der Stelleinrichtung mit mindestens einem ersten hydraulischen Druck und/oder einer Zu-/Abfuhr eines ersten Volumenstromes des Fluides, hydraulisch verbunden ist. Gemäß der Erfindung sind das Hydrauliksystem und/oder die Stelleinrichtung derart ausgebildet, dass bei einer Verlagerung eines Kolbens des Hydraulikzylinders zumindest ein Teil des Fluides von einem Zylinderraum in den anderen Zylinderraum geleitet wird, insbesondere zum Absenken des Werkzeuges in die Arbeitsposition und/oder zum Ausheben des Werkzeuges in die Transportposition.

## Beschreibung

Die vorliegende Erfindung betrifft eine landwirtschaftliche Arbeitsmaschine, insbesondere zur Bodenbearbeitung, sowie ein Verfahren zum Betrieb einer landwirtschaftlichen Arbeitsmaschine.

Eine landwirtschaftliche Arbeitsmaschine, insbesondere zur Bodenbearbeitung oder Aussaat, kann beispielsweise eine Hacke, ein Striegel oder eine Sämaschine in Form einer Drillmaschine oder Einzelkornsämaschine sein. Zum Ausbringen von Saatgut, welches in Reihen abgelegt werden soll, kommen üblicherweise pneumatische Sämaschinen bzw. Einzelkornsämaschinen zum Einsatz. Zum Einbringen des Saatgutes in den Boden weisen die Sämaschinen Werkzeuge zur Bodenbearbeitung in unterschiedlichen Ausgestaltungen auf, beispielsweise in Form von Scheibenscharen. Die Werkzeuge sind dabei üblicherweise in sogenannten Reiheneinheiten angeordnet, welche jeweils einer anzulegenden Saatgutreihe zugeordnet sind, wobei die Reiheneinheiten höhenbeweglich ausgestaltet sein können, um beispielsweise bei einem Straßentransport einen Kontakt der Werkzeuge mit dem Boden zu vermeiden.

Aus der WO 2019 023581 A1 ist eine gattungsgemäße landwirtschaftliche Arbeitsmaschine mit Reiheneinheiten zur Saatgutausbringung bekannt, wobei die Arbeitsmaschine im Betrieb an ein Zugfahrzeug angehängt werden kann. Das auszubringende Saatgut wird in einem zentralen Vorratsbehälter aufbewahrt und kann je nach Bedarf an die Reiheneinheiten geleitet werden. Eine Mehrzahl an Reiheneinheiten sind beabstandet zueinander quer zur Arbeitsrichtung an einem Rahmen angeordnet und weisen jeweils Werkzeuge zur Bodenbearbeitung auf. Die Werkzeuge der Reiheneinheiten dienen dem Öffnen und Schließen einer Saatfurche, in welche mittels eines Saatgut-Dosiersystems der Reiheneinheit das Saatgut abgelegt wird. Um die Werkzeuge bzw. die Reiheneinheiten beispielsweise in eine Transportstellung auszuheben oder in eine Arbeitsposition abzusenken sind an den Reiheneinheiten jeweils Hydraulikzylinder vorgesehen. Über diese Zylinder kann in einer abgesenkten Arbeitsposition der Werkzeuge zusätzliche eine abwärts gerichtete Kraft auf diese ausgeübt werden, beispielsweise um wechselnde Feldbedingungen auszugleichen und eine optimale Saatgutablage im Boden zu gewährleisten. Nachteilig ist hierbei jedoch, dass bei steigenden Arbeitsbreiten ein entsprechendes Hydrauliksystem immer leistungsfähiger ausgelegt werden muss.

Es ist daher die Aufgabe der vorliegenden Erfindung eine landwirtschaftliche Arbeitsmaschine sowie ein Verfahren zum Betrieb einer solchen landwirtschaftlichen Arbeitsmaschine anzugeben, welche eine effizientere Auslegung eines Hydrauliksystems der Arbeitsmaschine und eine effizientere Arbeitsweise der Arbeitsmaschine ermöglicht.

Die Aufgabe wird gelöst durch einen Verstellmechanismus gemäß den Merkmalen des Anspruches 1 sowie einem Verfahren nach Anspruch 10. Vorteilhafte Ausgestaltungen der Erfindung sind in den Unteransprüchen angegeben.

Eine landwirtschaftliche Arbeitsmaschine, insbesondere zur Bodenbearbeitung, mit mindestens einem verlagerbar angeordneten Werkzeug, einer hydraulischen Stelleinrichtung zum Verlagern des mindestens einen Werkzeuges zwischen einer ausgehobenen Transportposition und einer abgesenkten Arbeitsposition, wobei die Stelleinrichtung mindestens einen fluidgefüllten Hydraulikzylinder umfasst, welcher zwei Zylinderräume aufweist, wobei die Zylinderräume durch einen verschiebbaren Kolben getrennt sind, und wobei die Stelleinrichtung mit einem Hydrauliksystem mit einer Betätigungseinheit zur Beaufschlagung der Stelleinrichtung mit mindestens einem ersten hydraulischen Druck und/oder einer Zu-/Abfuhr eines ersten Volumenstromes des Fluids, hydraulisch verbunden ist. Gemäß der Erfindung sind das Hydrauliksystem und/oder die Stelleinrichtung derart ausgebildet, dass bei einer Verlagerung eines Kolbens des Hydraulikzylinders zumindest ein Teil des Fluides von einem Zylinderraum in den anderen Zylinderraum geleitet wird, insbesondere zum Absenken des Werkzeuges in die Arbeitsposition und/oder zum Ausheben des Werkzeuges in die Transportposition.

Die landwirtschaftliche Arbeitsmaschine zur Bodenbearbeitung oder Aussaat kann beispielsweise in Form einer Hacke, eines Striegels oder einer Sämaschine in Form einer Drillmaschine oder einer Einzelkornsämaschine ausgebildet sein. Die Werkzeuge zur Bodenbearbeitung können Hackwerkzeuge wie Striegel oder Säwerkzeuge sein, welche beispielsweise in Form von Scheibenscharen ausgebildet sein können. Die Werkzeuge können dabei, insbesondere mittelbar oder unmittelbar, an einem Rahmen der Arbeitsmaschine angeordnet sein und in vertikaler Richtung verlagerbar sein. Die Werkzeuge können dabei an Reiheneinheiten gelagert sein, welche zumindest in vertikaler Richtung verlagerbar ausgebildet und insbesondere jeweils einer Saatgutreihe zugeordnet sein können. Eine Verlagerung der Werkzeuge kann mittels einer hydraulischen Stelleinrichtung erfolgen, wobei die Werkzeuge zwischen einer Transportposition und einer Arbeitsposition verlagert werden können. In der Arbeitsposition können die Werkzeuge in Bodeneingriff stehen und diesen bearbeiten. In der Transportposition können die Werkzeuge bodenkontaktfrei ausgehoben sein und beispielsweise in zumindest vertikaler Richtung maximal für einen Straßentransport verschwenkt sein.

Die hydraulische Stelleinrichtung weist mindestens einen fluidgefüllten Hydraulikzylinder auf, welcher zwei durch einen verschiebbaren Kolben getrennte Zylinderräume aufweist. Die Zylinderräume können als ein bodenseitig des Kolbens ausgebildeter Kolbenraum und ein stangenseitig des Kolbens ausgebildeter Ringraum ausgestaltet sein. Der Hydraulikzylinder kann als Differenzialzylinder ausgebildet sein, wobei eine Druckbeaufschlagung des Kolbenraumes zu einem Absenken der Werkzeuge in die Arbeitsstellung und eine Druckbeaufschlagung des Ringraumes zu einem Ausheben der Werkzeuge führen kann. Der Ringraum des Hydraulikzylinders kann dabei eine kleinere hydraulisch wirksame Fläche aufweisen als der Kolbenraum. Zur Betätigung des mindestens einen Hydraulikzylinders ist die Stelleinrichtung hydraulisch mit einem Hydrauliksystem verbunden. Über eine Betätigungseinheit des Hydrauliksystems kann die Stelleinrichtung mit einer ersten Druckleitung und einer hydraulischen Pumpe und/oder einem Reservoir zur Druckbeaufschlagung mit einem ersten hydraulischen Druck und/oder einer Zu-/Abfuhr eines ersten Volumenstromes des Fluids verbunden werden. Das Hydrauliksystem kann dabei druckspeicherfrei ausgebildet sein.

Erfindungsgemäß ist das Hydrauliksystem und/oder die Stelleinrichtung derart ausgebildet, dass bei einer Verlagerung eines Kolbens des Hydraulikzylinders zumindest ein Teil des Fluides von einem Zylinderraum in den anderen Zylinderraum geleitet wird. So kann beispielsweise bei einem Absenken des Werkzeuges in die Arbeitsposition aus dem Ringraum des Hydraulikzylinders verdrängtes Fluid unmittelbar in den Kolbenraum des Hydraulikzylinders geleitet werden, oder umgekehrt bei einem Ausheben des Werkzeuges in die Transportposition.

Dies hat den Effekt, dass bei einer Bewegung des Kolbens das dafür benötigte Fluid, beispielsweise zum Füllen des Kolbenraumes, direkt aus dem sich verkleinernden Ringraum zum Kolbenraum geleitet werden kann. Dadurch kann ein größerer Anteil des benötigten Fluids direkt aus dem Ringraum entnommen werden kann und nur eine geringere Menge an zusätzlichem Fluid muss durch das Hydrauliksystem dem Kolbenraum zugeführt werden. Somit wird über das Hydrauliksystem lediglich ein geringes Differenzvolumen zu- oder abgeführt, wodurch eine sogenannte Eilgangschaltung ausgebildet werden kann. Dies bietet den Vorteil, dass bei unveränderter Fördermenge eines Fluides des Hydrauliksystems eine schnellere Bewegung des Kolbens ermöglicht werden kann, als wenn das gesamte Fluid zum Befüllen des Kolbenraumes oder Ringraumes über das Hydrauliksystem neu zugeführt werden müsste. Durch die Reduzierung des zusätzlich benötigten hydraulischen Fördervolumens, insbesondere eines Zugfahrzeuges der Arbeitsmaschine, kann das Hydrauliksystem bei unveränderter Arbeitsbreite effizienter ausgelegt werden, wodurch Gewicht und Material eingespart und im Betrieb der Arbeitsmaschine Energie eingespart werden kann, wodurch die Effizienz der Arbeitsmaschine erhöht wird. Ein weiterer Vorteil ist, dass durch die teilweise Einleitung eines Teils des Fluides eine Absenk- und/oder Aushubgeschwindigkeit der Werkzeuge erhöht werden kann, wodurch beispielsweise im Vorgewende eine kleiner Überlappungsfläche ermöglicht werden kann, wodurch Saatgut und somit Kosten eingespart werden. Eine schnellere Verlagerung der Werkzeuge kann zudem eine Erhöhung der Arbeits- bzw. Fahrgeschwindigkeit an einem Vorgewende ermöglichen, wodurch die Flächenleistung der Arbeitsmaschine und damit deren Effizienz erhöht wird.

In einer vorteilhaften Ausgestaltung ist die Stelleinrichtung über mindestens eine erste Arbeitsleitung und eine zweite Arbeitsleitung mit einem ersten Druckanschluss des Hydrauliksystems verbunden, wobei die erste Arbeitsleitung mit einem ersten Zylinderraum, insbesondere einem Ringraum, und die zweite Arbeitsleitung mit einem zweiten Zylinderraum, insbesondere einem Kolbenraum, des Hydraulikzylinders verbunden ist, und in der ersten Arbeitsleitung ein erstes Rückschlagventil und zwischen der ersten und zweiten Arbeitsleitung eine erste Verbindungsleitung mit einem, insbesondere gesteuerten, zweiten Rückschlagventil angeordnet ist, wobei die erste Verbindungsleitung stelleinrichtungsseitig des ersten Rückschlagventils in die erste Arbeitsleitung mündet. Die erste und zweite Arbeitsleitung des Hydrauliksystems sind jeweils mit einem Zylinderraum des Stellmittels bzw. des Hydraulikzylinders hydraulisch verbunden. Das erste Rückschlagventil in der ersten Arbeitsleitung kann derart angeordnet sein, dass ein Rücklauf des Fluides von der Stelleinrichtung, insbesondere der Ringkammer, zu einem Reservoir gesperrt wird, beispielsweise bei einem Absenken der Werkzeuge. Das gesteuerte zweite Rückschlagventil kann derart angeordnet sein, dass eine Flussrichtung von der zweiten zur ersten Arbeitsleitung durch die erste Verbindungsleitung gesperrt ist. Das gesteuerte zweite Rückschlagventil kann mit einer Steuerleitung auf einer stelleinrichtungsabgewandten Seite des ersten Rückschlagventils mit der ersten Arbeitsleitung derart verbunden sein, dass eine Druckbeaufschlagung der ersten Arbeitsleitung das gesteuerte zweite Rückschlagventil schließt. Die Verwendung und entsprechende Schaltung der beiden Rückschlagventile ermöglicht eine konstruktiv einfache und kostengünstige Ausgestaltung des Hydrauliksystems.

In einer besonders bevorzugten Ausgestaltung ist das zweite Rückschlagventil fluidisch mit einer hydraulischen Betätigungseinheit verbunden. Das zweite Rückschlagventil kann in Form eines gesteuerten Rückschlagventils ausgebildet sein. Die Betätigungseinheit zur Druckbeaufschlagung der Stelleinrichtung kann beispielsweise in Form eines hydraulischen Steuergerätes ausgebildet sein, welches beispielsweise auf einem Zugfahrzeug der Arbeitsmaschine angeordnet sein kann. Eine Bedienung der Betätigungseinheit kann beispielsweise durch eine Steuereinheit wie ein Bedienterminal durch einen Bediener erfolgen.

Vorzugsweise ist der Hydraulikzylinder derart ausgestaltet und ausgebildet, dass bei einer Betätigung der Stelleinrichtung zumindest ein Teil des Fluides von einer Zylinderkammer in die andere Zylinderkammer geleitet wird. Der Hydraulikzylinder kann eine, insbesondere selbstregelnde, Schalteinheit aufweisen, welche bei einer entsprechenden Druckbeaufschlagung der Arbeitsleitungen das Fluid unmittelbar innerhalb des Hydraulikzylinders von einer Zylinderkammer in die andere Zylinderkammer leitet. Die Stelleinrichtung bzw. der Hydraulikzylinder können dabei in Form eines sogenannten Eilgangzylinders ausgestaltet sein. Dies bietet den Vorteil, dass mit einfachen Mitteln durch entsprechende Nachrüstung an einer Arbeitsmaschine der erfindungsgemäße Effekt erreicht werden kann.

Besonders bevorzugt weist das Hydrauliksystem eine Regeleinheit mit einer dritten Arbeitsleitung auf, welche mit der Stelleinrichtung hydraulisch verbunden ist, insbesondere über eine zweite Verbindungsleitung mit einem ersten Druckbegrenzungsventil, welche mit der ersten und/oder zweiten Arbeitsleitung hydraulisch verbunden ist. Die dritte Arbeitsleitung der Regeleinheit kann mit einer zweiten Druckleitung und einer hydraulischen Pumpe und/oder einem Reservoir zur kontinuierlichen Druckbeaufschlagung mit einem zweiten Druck und/oder der Zu- und Abfuhr des zweiten Volumenstromes hydraulisch verbunden sein. Über die Regeleinheit kann die Stelleinrichtung mit einem einstellbaren zweiten hydraulischen Druck und/oder einem zweiten Volumenstrom, insbesondere ringraum- und/oder kolbenraumseitig, beaufschlagt werden. Das erste Druckbegrenzungsventil kann einstellbar ausgebildet sein. Die zweite Druckleitung kann zugfahrzeugseitig hydraulisch gespeist werden, beispielsweise als sogenannte Power-beyond-Leitung.

In einer weiter bevorzugten Ausgestaltung ist die Regeleinheit über eine dritte Verbindungsleitung mit der zweiten Arbeitsleitung und/oder der ersten Verbindungsleitung hydraulisch verbunden, wobei insbesondere die dritte Verbindungsleitung ein zweites Druckbegrenzungsventil aufweist. Das zweite Druckbegrenzungsventil kann einstellbar ausgestaltet sein. Über die dritte Verbindungsleitung kann die Stelleinrichtung, insbesondere der Ringraum und/oder der Kolbenraum des Hydraulikzylinders, mit dem zweiten Druck und/oder zweiten Volumenstrom zusätzlich zum ersten Druck und/oder ersten Volumenstrom beaufschlagt werden, beispielsweise um die Werkzeuge in die Transport- oder Arbeitsposition zu verbringen.

Vorzugsweise weist die dritte Verbindungsleitung, welche insbesondere in die erste Arbeitsleitung mündet, ein Sicherungsmittel auf. Das Sicherungsmittel kann beispielsweise zwischen der ersten Arbeitsleitung und dem ersten Druckregelventil angeordnet sein. Das Sicherungsmittel kann in Form eines Leitungsbruchsicherungsventils oder einer einstellbaren Drossel ausgebildet sein. Das Leitungsbruchsicherungsventil ermöglicht ein Verfahren des Hydraulikzylinders, wobei bei Erreichen eines bestimmten, insbesondere zweiten, Volumenstroms und/oder Druckes das Leitungsbruchsicherungsventil in eine gesperrte Stellung schaltet, in der der Hydraulikzylinder seine Position beibehält, aber die Verbindungsleitung unterbrochen werden kann. Eine, insbesondere einstellbare, Drossel bietet den Vorteil einer technisch einfachen Umsetzung.

In einer bevorzugten Ausgestaltung sind die Betätigungseinheit und die Regeleinheit jeweils mit demselben oder mit unterschiedlichen Drücken beaufschlagbar. Die Betätigungseinheit kann mit einem ersten Druckanschluss mit einem ersten Druck verbunden werden und die Regeleinheit mit einem zweiten Druckanschluss. Die Drücke und/oder Volumenströme des ersten und zweiten Druckanschlusses können dabei gleich oder unterschiedlich sein.

In einer besonders bevorzugten Ausgestaltung ist eine Steuereinheit vorgesehen, welche der Ansteuerung mindestens der Betätigungseinheit und/oder der Schalteinheit dient. Die Steuereinheit kann von einem Bediener betätigt werden, um die Betätigungseinheit und/oder Schalteinheit zu bedienen. Weiterhin können das erste und zweite Druckbegrenzungsventil und/oder ein einstellbares Drosselrückschlagventil in der zweiten Arbeitsleitung durch die Steuereinheit einstellbar und/oder betätigbar sein. Die Steuereinheit kann über ein Bussystem mit den jeweiligen Komponenten verbunden sein.

Weiterhin betrifft die Erfindung ein Verfahren zum Betreiben einer landwirtschaftlichen Maschine, insbesondere zur Bodenbearbeitung, mit einer hydraulischen Stelleinrichtung zum Verlagern mindestens eines Werkzeuges zwischen einer ausgehobenen Transportposition und einer abgesenkten Arbeitsposition, wobei die Stelleinrichtung mindestens einen fluidgefüllten Hydraulikzylinder umfasst, welcher zwei Zylinderräume aufweist, wobei die Zylinderräume durch einen verschiebbaren Kolben getrennt sind, und wobei die Stelleinrichtung mit einem Hydrauliksystem mit einer Betätigungseinheit zur Beaufschlagung der Stelleinrichtung mit mindestens einem ersten hydraulischen Druck und/oder einer Zu-/Abfuhr eines ersten Volumenstromes des Fluides, hydraulisch verbunden ist. Erfindungsgemäß wird bei einer Betätigung der Stelleinrichtung und einer Verlagerung des Kolbens des Hydraulikzylinders zumindest ein Teil des Fluides von einem Zylinderraum in den anderen Zylinderraum geleitet, insbesondere zum Absenken des Werkzeuges in die Arbeitsposition und/oder zum Ausheben des Werkzeuges in die Transportposition.

Dies hat den Effekt, dass bei einer Betätigung der Stelleinrichtung und damit einer Bewegung des Kolbens des Hydraulikzylinders ein für die Kolbenbewegung benötigtes Fluid zum Füllen beispielsweise des Kolbenraumes direkt aus dem sich verkleinernden Ringraum zum Kolbenraum geleitet werden kann, wodurch ein größerer Anteil des benötigten Fluids direkt aus dem Ringraum entnommen werden kann und eine geringere Menge an zusätzlichem Fluid durch das Hydrauliksystem dem Kolbenraum zugeführt werden muss. Über das Hydrauliksystem muss so lediglich ein geringes Differenzvolumen zu- oder abgeführt werden, wodurch eine sogenannte Eilgangschaltung ausgebildet werden kann. Dies bietet den Vorteil, dass bei unveränderter Fördermenge an Fluid des Hydrauliksystems eine schnellere Bewegung des Kolbens ermöglicht werden kann, als wenn das gesamte Fluid zum Befüllen des Kolbenraumes oder Ringraumes über das Hydrauliksystem neu zugeführt werden müsste. Durch die Reduzierung des zusätzlich benötigten hydraulischen Fördervolumens, insbesondere eines Zugfahrzeuges der Arbeitsmaschine, kann das Hydrauliksystem bei unveränderter Arbeitsbreite effizienter ausgelegt werden, wodurch Gewicht und Material eingespart und im Betrieb der Arbeitsmaschine Energie eingespart werden kann, wodurch die Effizienz der Arbeitsmaschine erhöht werden kann. Ein weiterer Vorteil ist, dass durch die teilweise Einleitung eines Teils des Fluides eine Absenk- und/oder Aushubgeschwindigkeit der Werkzeuge erhöht werden kann, wodurch beispielsweise im Vorgewende eine kleinere Überlappungsfläche ermöglicht werden kann, wodurch Saatgut und somit Kosten eingespart werden können. Eine schnellere Verlagerung der Werkzeuge kann zudem eine Erhöhung der Arbeits- bzw. Fahrgeschwindigkeit an einem Vorgewende ermöglichen, wodurch die Flächenleistung der Arbeitsmaschine und damit deren Effizienz erhöht werden kann.

Weitere Einzelheiten der Erfindung sind den Figuren und der Figurenbeschreibung zu entnehmen, die eine bevorzugte Ausführung der Erfindung zeigen.

Es zeigen:
- Fig 1:: eine schematische Seitenansicht einer landwirtschaftlichen Arbeitsmaschine mit einer Stelleinrichtung;
- Fig. 2:: einen Schaltplan eines Hydrauliksystems zum Betätigen der Stelleinrichtung;
- Fig. 3:: einen Schaltplan mit einer Stelleinrichtung in einer zweiten Ausgestaltung; und
- Fig. 4:: einen Schaltplan eines Hydrauliksystems gemäß Fig. 2 in einer erweiterten Ausführungsform.

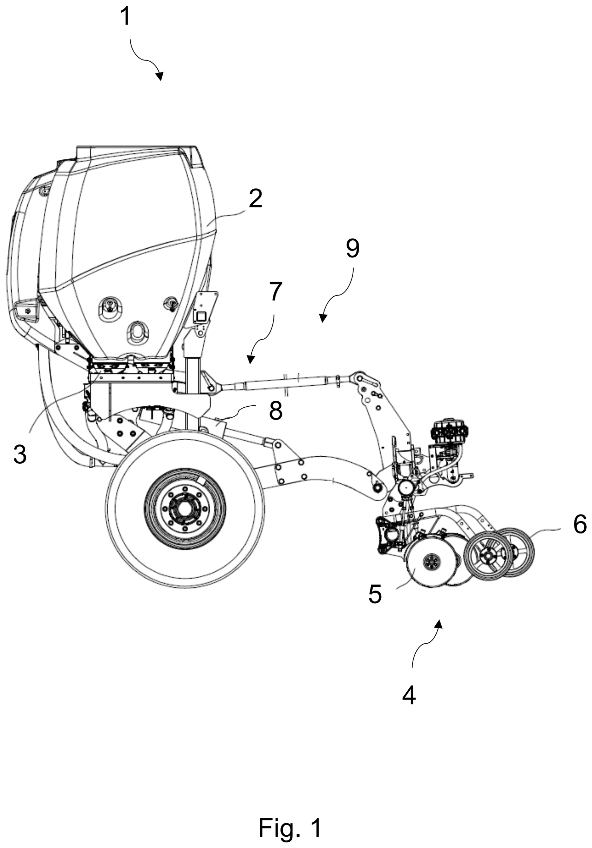

Figur 1 zeigt eine schematische Seitenansicht einer landwirtschaftlichen Arbeitsmaschine 1 in Form einer Sämaschine. Die landwirtschaftliche Arbeitsmaschine 1 kann im Betrieb an ein Zugfahrzeug (nicht dargestellt) angebaut oder angehängt werden. Zum Ausbringen von Saatgut und/oder Dünger aus einem Behälter 2 weist die Arbeitsmaschine 1 eine Dosiervorrichtung 3 auf. Das Saatgut und/oder Dünger, welches in den Boden ausgebracht werden soll, wird pneumatisch Werkzeugen 4 zur Bodenbearbeitung zugeführt, die jeweils einer anzulegenden Saatgutreihe zugeordnet sind. Je nach Arbeitsbreite des Arbeitsmaschine 1 können so eine Mehrzahl an Werkzeugen 4 nebeneinander angeordnet sein. Die dargestellten Werkzeuge 4 sind dabei in Form von Doppelscheibenscharen 5 zum Öffnen des Bodens und als Tiefenführungsrollen 6 dargestellt. Die Werkzeuge 4 sind in der Höhe verlagerbar ausgestaltet und können so zwischen einer dargestellten abgesenkten Arbeitsposition und einer ausgehobenen Transportposition (nicht dargestellt) zumindest vertikal verlagert werden. In Arbeitsposition befinden sich die Werkzeuge 4 in Bodeneingriff oder zumindest in Bodenkontakt, wohingegen in der Transportstellung die Werkzeuge bodenkontaktfrei angehoben sein können. Über eine Parallelogrammführung 9 sind die Werkzeuge mit einem Rahmen der Arbeitsmaschine 1 verbunden. Mittels einer hydraulischen Stelleinrichtung 7, welche mindestens einen Hydraulikzylinder 8 aufweist, können die Werkzeuge 4 verlagert werden.

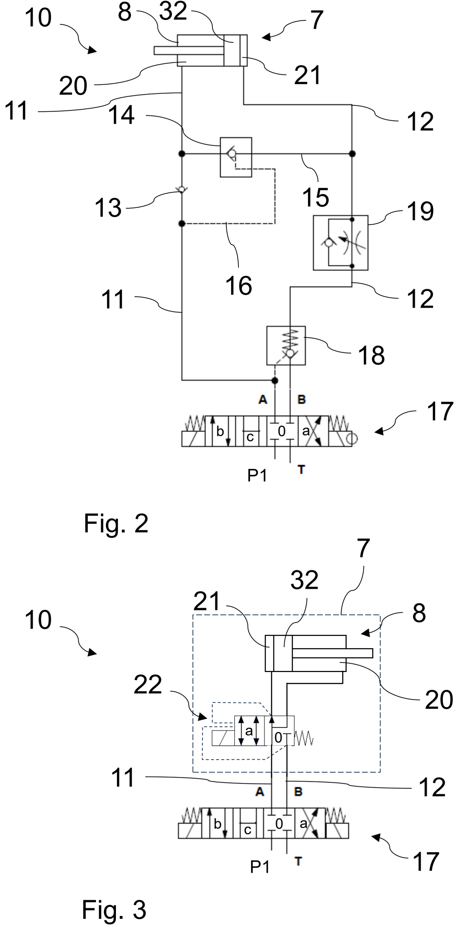

In Fig. 2 ist ein Schaltplan eines Hydrauliksystems 10 zur Betätigung der Stelleinrichtung 7 bzw. des Hydraulikzylinders 8 dargestellt. Der Hydraulikzylinder 8 ist in Form eines Differenzzylinders ausgebildet und weist einen ersten Zylinderraum 20 in Form eines Ringraumes und einen zweiten Zylinderraum 21 in Form eines Kolbenraumes auf, welche durch einen beweglichen Kolben 32 getrennt sind. Eine Druckbeaufschlagung des zweiten Zylinderraumes 21 bzw. Kolbenraumes kann ein Absenken der Werkzeuge 4 in die Arbeitsposition bewirken. Eine Druckbeaufschlagung des ersten Zylinderraumes 20 bzw. des Ringraumes kann ein Ausheben der Werkzeuge in die Transportposition bewirken.

Die Stelleinrichtung 7 ist mit einer ersten Arbeitsleitung 11 und einer zweiten Arbeitsleitung 12 mit einer Betätigungseinheit 17 verbunden. Die erste Arbeitsleitung 11 ist hierbei mit dem ersten Zylinderraum 20 bzw. dem Ringraum und die zweite Arbeitsleitung 12 mit dem zweiten Zylinderraum 21 bzw. dem Kolbenraum hydraulisch verbunden. Die Betätigungseinheit 17 ist in Form eines 4/4-WegeVentils ausgebildet, welches die hydraulische Verbindung der ersten und zweiten Arbeitsleitung 11, 12, mit einem ersten Druckanschluss P1 und einem Reservoir T in den Schaltstellungen b bzw. a ermöglicht. In der Schaltstellung 0 ist die Betätigungseinheit 17 gesperrt und in Schaltstellung c ist eine Schwimmstellung einstellbar. Die erste Arbeitsleitung 11 ist mit Anschluss A der Betätigungseinheit 17 und mit dem ersten Zylinderraum 20 verbunden. Die zweite Arbeitsleitung 12 verbindet den Anschluss B der Betätigungseinheit 17 mit dem zweiten Zylinderraum 21 bzw. dem Kolbenraum.

Erfindungsgemäß sind das Hydrauliksystem 10 und/oder die Stelleinrichtung 7 derart ausgebildet, dass bei einer Verlagerung eines Kolbens 32 des Hydraulikzylinders 8 zumindest ein Teil des Fluides von einem Zylinderraum 20, 21 in den anderen Zylinderraum 21, 20 geleitet wird, insbesondere zum Absenken des Werkzeuges 4 in die Arbeitsposition und/oder zum Ausheben des Werkzeuges 4 in die Transportposition, wodurch eine sogenannte Eilgangschaltung hergestellt werden kann. In dem dargestellten Ausführungsbeispiel ist in der ersten Arbeitsleitung 11 ein erstes Rückschlagventil 13 angeordnet, welches in Richtung der Betätigungseinheit 17 sperrt. Zudem ist zwischen der ersten und zweiten Arbeitsleitung 11, 12 eine erste Verbindungsleitung 15 angeordnet, welche stelleinrichtungsseitig des ersten Rückschlagventils 13 in die erste Arbeitsleitung 11 mündet. In der ersten Verbindungsleitung 15 ist ein gesteuertes zweites Rückschlagventil 14 angeordnet, welches in Richtung der ersten Arbeitsleitung 11 sperrt. Eine Steuerleitung 16 des gesteuerten zweiten Rückschlagventils 14 ist betätigungseinheitsseitig mit der ersten Arbeitsleitung 11 hydraulisch verbunden.

In der zweiten Arbeitsleitung 12 ist benachbart zur Betätigungseinheit 17 ein gesteuertes drittes Rückschlagventil 18 angeordnet, dessen Steuerleitung mit der ersten Arbeitsleitung 11 verbunden ist. Zudem ist zwischen drittem Rückschlagventil 18 und der Verbindung zur ersten Verbindungsleitung 15 ein einstellbares Drosselrückschlagventil 19 in der zweiten Arbeitsleitung 12 angeordnet, wobei das Rückschlagventil in Richtung Stelleinrichtung 7 sperrt. Das Drosselrückschlagventil 19 begrenzt die der Stelleinrichtung 7 zugeführte Fluidmenge.

Bei einer Schaltung der Betätigungseinheit 17 in Schaltstellung b wird die erste Arbeitsleitung 11 mit dem ersten Druckanschluss P1 verbunden und mit einem entsprechenden ersten Druck P1 beaufschlagt und ein erster Volumenstrom zugeführt, wodurch der Kolben 32 in die dargestellte Position, welche der Transportposition entspricht, verfahren werden kann. Bei einem anschließenden Absenken der Werkzeuge in die Arbeitsposition, durch Schalten der Betätigungseinheit 17 in Schaltstellung a, wird der Kolbenraum 21 mit Druck beaufschlagt, um eine Bewegung des Kolbens 32 zu bewirken. Dabei wird das aus dem Ringraum 20 verdrängte Fluid zunächst in die erste Arbeitsleitung 11 geleitet. Aufgrund des gesperrten ersten Rückschlagventils 13 wird das Fluid über die erste Verbindungsleitung 15 und das zweite Rückschlagventil 14 in die zweite Arbeitsleitung 12 geleitet und gelangt von dort unmittelbar in den Kolbenraum 21. Aufgrund des kleineren Volumens des Ringraumes 20 gegenüber dem Kolbenraum 21 muss über das Hydrauliksystem 10 die fehlende Fluiddifferenz dem Kolbenraum 21 über die zweite Arbeitsleitung 12 zugeführt werden. Da es sich hierbei aber um eine kleiner Fluidmenge handelt, und das Fluid für den Kolbenraum 21 überwiegend unmittelbar aus dem Ringraum 20 zugeführt wird, kann so eine schnelle Bewegung des Kolbens 32 ermöglicht werden.

In Fig. 3 ist eine weitere Ausführungsform dargestellt, in der die Stelleinrichtung 7 unmittelbar über eine erste und zweite Arbeitsleitung 11, 12 mit der Betätigungseinheit 17 hydraulisch verbunden ist. Die Stelleinrichtung 7 weist dabei einen Hydraulikzylinder 8 mit integrierter Schalteinheit 22 auf. Die Schalteinheit 22 ist dabei in Form eines selbstregelnden 4/2-Wege-Ventils ausgebildet, welche eine erfindungsgemäße Umleitung des Fluides beispielsweise aus dem Ringraum 20 in den Kolbenraum 21 ermöglicht. Die Schalteinheit 22 kann selbstregelnd und/oder schaltbar, beispielsweise durch eine Steuereinheit (nicht dargestellt) ausgebildet sein, wodurch eine erfindungsgemäße Schaltung ein- oder abstellbar wäre. Die Schalteinheit 22 weist zwei Schaltstellungen 0 und a auf. In der dargestellten Schaltstellung 0 kann bei Betätigung der Betätigungseinheit 17 in Schaltstellung b der Kolbenraum 21 über die erste Arbeitsleitung 11 mit dem ersten Druckanschluss P1 hydraulisch verbunden werden, wodurch der Kolben 32 ausfährt und die Werkzeuge in Arbeitsposition verbracht werden können. Aufgrund der Schaltstellung 0 der Schalteinheit 22 wird das aus dem Ringraum 20 zurückströmende Fluid unmittelbar in den Kolbenraum 21 umgeleitet, wodurch ein schnelles Ausfahren des Kolbens 32 ermöglicht werden kann. Über die Arbeitsleitung 11 muss lediglich ein geringes Differenzvolumen dem Kolbenraum 21 zugeführt werden. Um den Kolben 32 in die Transportposition zu verlagern, muss der Ringraum 20 mit Druck beaufschlagt werden, was über die Schaltstellung b der Betätigungseinheit 17 erfolgen kann. In diesem Falle schaltet die Schalteinheit 22 bei einem Druckanstieg auf der Arbeitsleitung 11 in Schaltstellung a, so dass der Ringraum 20 mit dem ersten Druckanschluss P1 und der Kolbenraum 21 mit dem Reservoir T verbunden ist.

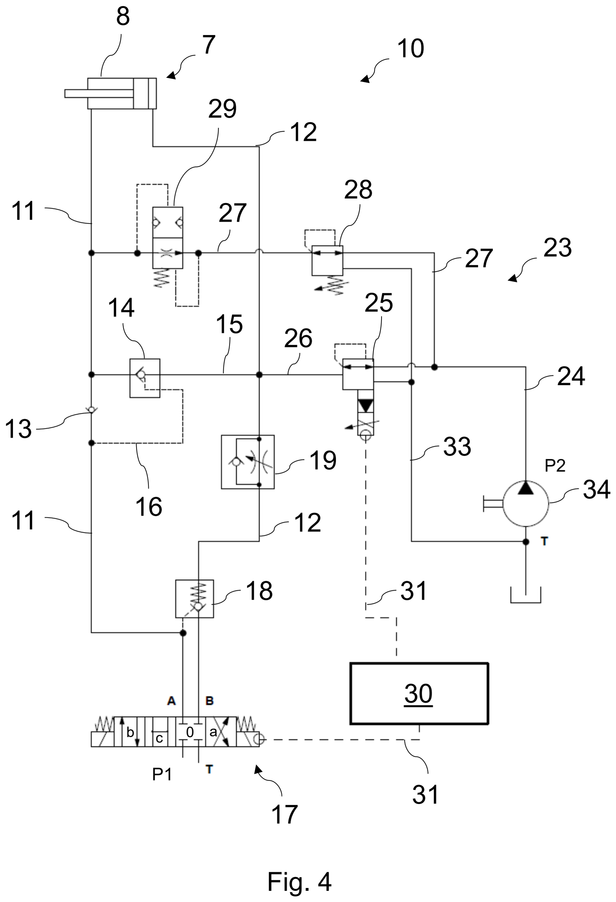

In Fig. 4 ist ein Hydrauliksystem 10 dargestellt, welches eine Erweiterung des in Fig. 2 dargestellten Schaltplans zeigt. Das Hydrauliksystem 10 aus Fig. 2 wird dabei im Wesentlichen um eine Regeleinheit 23 ergänzt, um die Leistungsfähigkeit des Hydrauliksystems 10 weiter zu erhöhen. Die Regeleinheit 23 weist einen zweiten Druckanschluss P2 mit einer Pumpe 34 auf. Der zweite Druckanschluss P2 ist über eine dritte Arbeitsleitung 24 und eine zweite Verbindungsleitung 26 mit einem ersten Druckbegrenzungsventil 25 mit der zweiten Arbeitsleitung 12 und der ersten Verbindungleitung 15 hydraulisch verbindbar. Das Druckbegrenzungsventil 25 ist dafür eingerichtet einen Druck, insbesondere Schardruck, auf das Werkzeug 4, 5 zu regeln, insbesondere zu erhöhen und/oder zu verringern, um ein optimales Arbeitsergebnis der Werkzeuge 4 zu erzielen. Das erste Druckbegrenzungsventil 25 ist elektrisch betätigbar und über ein Bussystem 31 mit einer Steuereinheit 30 verbunden. Die Steuereinheit 30 ist über das Bussystem 31 ebenfalls mit der Betätigungseinheit 17 verbunden, um diese anzusteuern.

Weiterhin ist die dritte Arbeitsleitung 24 über eine dritte Verbindungsleitung 27 mit der ersten Arbeitsleitung 11 hydraulisch verbunden, wobei die dritte Verbindungsleitung 27 stelleinrichtungsseitig des ersten Rückschlagventils 13 und der ersten Verbindungsleitung 15 in die erste Arbeitsleitung 11 mündet. In der dritten Verbindungsleitung 27 ist druckanschlussseitig ein zweites Druckbegrenzungsventil 28 angeordnet, welches den auf die erste Arbeitsleitung 11 wirkenden Druck begrenzt und/oder einstellt. Durch die Regeleinheit 23 kann in Abhängigkeit eines jeweils an dem ersten und/oder zweiten Druckbegrenzungsventil 25, 28 wirkenden Druckes eine Kraft an dem Hydraulikzylinder 8 eingestellt werden. Hierdurch kann beispielsweise ein Boden bzw. Schardruck eingestellt werden, welcher auf ein Werkzeug 4 wirkt. Zwischen dem zweiten Druckbegrenzungsventil 28 und der ersten Arbeitsleitung 11 ist in der dritten Verbindungsleitung 27 ein Sicherungsmittel 29 angeordnet. Dieses Sicherungsmittel 29 begrenzt oder blockiert einen hydraulischen Volumenstrom und kann bei überschreiten eines Grenzvolumenstromes den Volumenstrom zur Regeleinrichtung 23 sperren, wodurch ein Einfahren des Hydraulikzylinders 8 ermöglicht werden kann. Das Sicherungsmittel 29 ist in Form eines Leitungsbruchsicherungsventils ausgebildet, welches den Volumenstrom in der dritten Verbindungsleitung 27 drosselt oder bei zu hohem Volumenstrom und/oder Druck die Verbindungsleitung 27 sperrt. Sowohl das erste als auch das zweite Druckbegrenzungsventil 25, 28 sind über eine vierte Arbeitsleitung 33 mit dem Reservoir T verbunden.

**Bezugszeichen**

| | | | |
|---|---|---|---|
| 1 | Arbeitsmaschine | 24 | Dritte Arbeitsleitung |
| 2 | Behälter | 25 | Erstes Druckbegrenzungsventil |
| 3 | Dosiervorrichtung | 26 | Zweite Verbindungsleitung |
| 4 | Werkzeug | 27 | Dritte Verbindungsleitung |
| 5 | Doppelscheibenschar | 28 | Zweites Druckbegrenzungsventil |
| 6 | Tiefenführungsrolle | 29 | Sicherungsmittel |
| 7 | Stelleinrichtung | 30 | Steuereinheit |
| 8 | Hydraulikzylinder | 31 | Bussystem |
| 9 | Parallelogrammführung | 32 | Kolben |
| 10 | Hydrauliksystem | 33 | Vierte Arbeitsleitung |
| 11 | Erste Arbeitsleitung | 34 | Pumpe |
| 12 | Zweite Arbeitsleitung | | |
| 13 | Erstes Rückschlagventil | A | Anschluss |
| 14 | Zweites Rückschlagventil | B | Anschluss |
| 15 | Erste Verbindungsleitung | P1 | Druckanschluss |
| 16 | Steuerleitung | P2 | Druckanschluss |
| 17 | Betätigungseinheit | T | Reservoir |
| 18 | Drittes Rückschlagventil | | |
| 19 | Drosselrückschlagventil | 0 | Schaltstellung |
| 20 | Erster Zylinderraum/ Ringraum | a | Schaltstellung |
| 21 | Zweiter Zylinderraum/ Kolbenraum | b | Schaltstellung |
| 22 | Schalteinheit | c | Schaltstellung |
| 23 | Regeleinheit | | |

## Patentansprüche

1. Landwirtschaftliche Arbeitsmaschine, insbesondere zur Bodenbearbeitung, mit mindestens einem verlagerbar angeordneten Werkzeug (4), einer hydraulischen Stelleinrichtung (7) zum Verlagern des mindestens einen Werkzeuges (4) zwischen einer ausgehobenen Transportposition und einer abgesenkten Arbeitsposition, wobei die Stelleinrichtung (7) mindestens einen fluidgefüllten Hydraulikzylinder (8) umfasst, welcher zwei Zylinderräume (20, 21) aufweist, wobei die Zylinderräume (20, 21) durch einen verschiebbaren Kolben (32) getrennt sind, und wobei die Stelleinrichtung (7) mit einem Hydrauliksystem (10) mit einer Betätigungseinheit (17) zur Beaufschlagung der Stelleinrichtung (7) mit mindestens einem ersten hydraulischen Druck (P1) und/oder einer Zu-/Abfuhr eines ersten Volumenstromes des Fluides, hydraulisch verbunden ist, **dadurch gekennzeichnet, dass** das Hydrauliksystem (10) und/oder die Stelleinrichtung (7) derart ausgebildet sind, dass bei einer Verlagerung eines Kolbens des Hydraulikzylinders (8) zumindest ein Teil des Fluides von einem Zylinderraum (20, 21) in den anderen Zylinderraum (21, 20) geleitet wird, insbesondere zum Absenken des Werkzeuges (4) in die Arbeitsposition und/oder zum Ausheben des Werkzeuges (4) in die Transportposition.

2. Arbeitsmaschine nach Anspruch 1, **dadurch gekennzeichnet, dass** die Stelleinrichtung (7) über mindestens eine erste Arbeitsleitung (11) und eine zweite Arbeitsleitung (12) mit einem ersten Druckanschluss (P1) des Hydrauliksystems (10) verbunden ist, wobei die erste Arbeitsleitung (11) mit einem ersten Zylinderraum (20), insbesondere einem Ringraum, und die zweite Arbeitsleitung (12) mit einem zweiten Zylinderraum (21), insbesondere einem Kolbenraum, des Hydraulikzylinders (8) verbunden ist, und in der ersten Arbeitsleitung (11) ein erstes Rückschlagventil (13) und zwischen der ersten und zweiten Arbeitsleitung (11, 12) eine erste Verbindungsleitung (15) mit einem, insbesondere gesteuerten, zweiten Rückschlagventil (14) angeordnet ist, wobei die erste Verbindungsleitung (15) stelleinrichtungsseitig des ersten Rückschlagventils (13) in die erste Arbeitsleitung (11) mündet.

3. Arbeitsmaschine nach Anspruch 1 oder 2, **dadurch gekennzeichnet, dass** das zweite Rückschlagventil (14) fluidisch mit der hydraulischen Betätigungseinheit (17) verbunden ist.

4. Arbeitsmaschine nach einem der vorherigen Ansprüche, **dadurch gekennzeichnet, dass** der Hydraulikzylinder (8) derart ausgestaltet und ausgebildet ist, dass bei einer Betätigung der Stelleinrichtung (7) zumindest ein Teil des Fluides von einer Zylinderkammer (20, 21) in die andere Zylinderkammer (21, 20) geleitet wird.

5. Arbeitsmaschine nach einem der vorherigen Ansprüche, **dadurch gekennzeichnet, dass** das Hydrauliksystem (10) eine Regeleinheit (23) mit einer dritten Arbeitsleitung (24) aufweist, welche mit der Stelleinrichtung (7) hydraulisch verbunden ist, insbesondere über eine zweite Verbindungsleitung (26) mit einem ersten Druckbegrenzungsventil (25), welche mit der ersten und/oder zweiten Arbeitsleitung (11, 12) hydraulisch verbunden ist.

6. Arbeitsmaschine nach einem der vorherigen Ansprüche, **dadurch gekennzeichnet, dass** die Regeleinheit (23) über eine dritte Verbindungsleitung (27) mit der zweiten Arbeitsleitung (12) und/oder der ersten Verbindungsleitung (15) hydraulisch verbunden ist, wobei insbesondere die dritte Verbindungsleitung (27) ein zweites Druckbegrenzungsventil (28) aufweist.

7. Arbeitsmaschine nach einem der vorherigen Ansprüche, **dadurch gekennzeichnet, dass** die dritte Verbindungsleitung (27), welche insbesondere in die erste Arbeitsleitung (11) mündet, ein Sicherungsmittel (29) aufweist.

8. Arbeitsmaschine nach einem der vorherigen Ansprüche, **dadurch gekennzeichnet, dass** die Betätigungseinheit (17) und die Regeleinheit (23) jeweils mit demselben oder mit unterschiedlichen Drücken beaufschlagbar sind.

9. Arbeitsmaschine nach einem der vorherigen Ansprüche, **dadurch gekennzeichnet, dass** eine Steuereinheit (30) vorgesehen ist, welche der Ansteuerung mindestens der Betätigungseinheit (17) und/oder der Schalteinheit (22) dient.

10. Verfahren zum Betreiben einer landwirtschaftliche Arbeitsmaschine, insbesondere zur Bodenbearbeitung, mit einer hydraulischen Stelleinrichtung (7) zum Verlagern mindestens eines Werkzeuges (4) zwischen einer ausgehobenen Transportposition und einer abgesenkten Arbeitsposition, wobei die Stelleinrichtung (7) mindestens einen fluidgefüllten Hydraulikzylinder (8) umfasst, welcher zwei Zylinderräume (20, 21) aufweist, wobei die Zylinderräume (20, 21) durch einen verschiebbaren Kolben (32) getrennt sind, und wobei die Stelleinrichtung (7) mit einem Hydrauliksystem (10) mit einer Betätigungseinheit (17) zur Beaufschlagung der Stelleinrichtung (7) mit mindestens einem ersten hydraulischen Druck (P1) und/oder einer Zu-/Abfuhr eines ersten Volumenstromes des Fluides, hydraulisch verbunden ist, **dadurch gekennzeichnet, dass** bei einer Betätigung der Stelleinrichtung (7) und einer Verlagerung des Kolbens des Hydraulikzylinders (8) zumindest ein Teil des Fluides von einem Zylinderraum (20, 21) in den anderen Zylinderraum (21, 20) geleitet wird, insbesondere zum Absenken des Werkzeuges (4) in die Arbeitsposition und/oder zum Ausheben des Werkzeuges (4) in die Transportposition.
